(19) Europäisches Patentamt
European Patent Office
Office européen des brevets

(11) **EP 2 624 495 A1**

(12) **EUROPEAN PATENT APPLICATION**

(43) Date of publication:
**07.08.2013 Bulletin 2013/32**

(51) Int Cl.:
*H04L 1/16* (2006.01)    *H04L 27/26* (2006.01)
*H04L 23/02* (2006.01)

(21) Application number: **12305115.3**

(22) Date of filing: **31.01.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventor: **Richter, Robert
12105 Berlin (DE)**

(74) Representative: **Kleinbub, Oliver et al
Alcatel-Lucent Deutschland AG
Intellectual Property & Standards
Lorenzstrasse 10
70435 Stuttgart (DE)**

(54) **A method for retransmission of reference signals in uplink, and network devices therefor**

(57) The invention concerns a method for retransmission of reference signals (DMRS3, DMRS4) in uplink from two network devices (UE14, UE23) to a further network device (BS1) in case of unsuccessful reception of said reference signals (DMRS1, DMRS2) in the further network device (BS1), wherein sequences for the retransmission of the reference signals (DMRS3, DMRS4) in uplink from said two network devices (UE14, UE23) are determined that lead to an improved reception in the further network device (BS1) of the retransmitted reference signals (DMRS3, DMRS4), said sequences for the retransmission of the reference signals (DMRS3, DMRS4) are signaled to said two network devices (UE14, UE23) using information which is directly signaled in downlink control information fields (ULRG1, ULRG2) and using changes of the information in the downlink control information fields (ULRG1, ULRG2) with respect to information in previous downlink control information fields (ULTG1, ULTG2), and network devices therefor.

Fig. 4

**Description**

**Field of the invention**

The invention relates to a method for retransmission of reference signals in uplink from at least two network devices to a further network device in case of unsuccessful reception of said reference signals in the further network device, and network devices adapted to perform said method.

**Background**

In wireless communication networks, such as Third Generation Partnership Project Long Term Evolution (3GPP LTE), the use of CoMP (CoMP = Coordinated Multipoint) will increase data capacity and service quality. CoMP will enable a high-bandwidth connection with a good service quality even for users which are close to a cell-edge.

According to the basic principle of CoMP, a user terminal which is located at the edge of a cell can receive signals from several cell sites, and also signals transmitted from the user terminal can be received in several cell sites. Thus, by means of combining and coordinating signals transmitted from the several cell sites, the performance in downlink can be significantly improved. In case of uplink transmission of signals from a user terminal which are received by several cell sites, if the scheduling is coordinated from the different cell sites, the link performance can be improved by application of CoMP.

Uplink coordinated multi-point reception is based on reception of a transmitted signal at several separated receivers, as e.g. several cell sites. Interference that might be generated by uplink transmission can be controlled by coordinated scheduling decisions among cells. The cooperating receiving units can be e.g. separate remote radio units of enhanced NodeBs, i.e. base stations, or relays.

**Summary**

In a Coordinated Multipoint (CoMP) network deployment as it is e.g. standardized for 3GPP LTE Release 11, it is anticipated that demodulation reference signal (DMRS) collisions, i.e. collision in uplink of demodulation reference signals transmitted from several network devices as e.g. user terminals or relays, will happen more often and if not resolved will result in degraded radio access network performance.

A basic problem of a Coordinated Multipoint (CoMP) network deployment is thus to resolve Demodulation reference signal (DMRS) collisions once they happened and resulted in unsuccessful reception.

The collision could in principle tried to be avoided in advance, however, this is an algorithmically difficult task which will require a lot of numerical, combinatorial and logical computations and will require significant amount of inter cell information exchange all happening within small time frames. This solution is close to technical infeasibility and can only be solved with significant investments into processing devices and radio access network interconnect infrastructure potentially resulting in economical infeasibility.

The object of the invention is thus to propose a method for coordination of uplink reference signaling that reduces demodulation reference signal collisions without introducing a significant resource to the scheduling procedure.

The basic idea of the invention is, that if a demodulation reference signal collision happened that resulted in unsuccessful reception of the radio transmission of at least two transmitting network devices sharing the same time-frequency radio resource, it is signaled in downlink to the involved transmitting network devices to use demodulation reference signals that would not collide but be orthogonal, i.e. non-colliding, in a respective retransmission of the initially unsuccessful radio transmission. As it is assumed that the root cause for the unsuccessful reception was DMRS collision, any other adaptive retransmission technique than to directly resolve the collision would come with efficiency drawbacks.

Furthermore, in order to keep the resources needed for signaling of downlink control information low, said demodulation reference signals that shall be used for retransmission are signaled in downlink using information which is directly signaled in downlink control information fields and using changes of the information in the downlink control information fields with respect to information in downlink control information fields for a previous transmission of reference signals.

The object of the invention is thus achieved by a method for retransmission of reference signals in uplink from at least two network devices to a further network device in case of unsuccessful reception of said reference signals in the further network device, wherein

• sequences for the retransmission of the reference signals in uplink from said at least two network devices are determined that lead to an improved reception in the further network device of the reference signals retransmitted from said at least two network devices,

- said sequences for the retransmission of the reference signals are signaled to said at least two network devices using information which is directly signaled in downlink control information fields and using changes of the information in the downlink control information fields with respect to information in downlink control information fields for a previous transmission of reference signals,

- and the reference signals are retransmitted in uplink from said at least two network devices using said signaled sequences for the retransmission of the reference signals.

The object of the invention is furthermore achieved by a network device for mobile communication, wherein said network device is adapted to

- receive sequences for a retransmission of reference signals by means of information which is directly signaled in downlink control information fields and by means of changes of the information in the downlink control information fields with respect to information in downlink control information fields for a previous transmission of reference signals,

- and retransmit reference signals in uplink using said signaled sequences for the retransmission of the reference signals.

The object of the invention is furthermore achieved by a network device for mobile communication, wherein said network device is adapted to

- determine sequences for a retransmission of reference signals in uplink from at least two other network devices that lead to an improved reception in the network device of the reference signals retransmitted from said at least two other network devices,

- and signal said sequences for the retransmission of the reference signals to at least one of said at least two other network devices using information which is directly signaled in downlink control information fields and using changes of the information in the downlink control information fields with respect to information in downlink control information fields for a previous transmission of reference signals.

The invention is described in the following within the framework of 3GPP LTE, however as the invention is not restricted to 3GPP LTE or enhancements thereof, but can in principle be applied in other networks that can apply scheduling principles for CoMP, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

**Brief description of the figures**

In the following the invention will be explained further making reference to the attached drawings.

Fig. 1 schematically shows a communication network in which the invention can be implemented.

Fig. 2 schematically shows the structure of a user terminal and a base station in which the invention can be implemented.

Fig. 3 schematically shows a scenario of collision of demodulation reference signals transmitted from two user terminals in a CoMP cluster.

Fig. 4 schematically shows a scenario for downlink signalling of transmission grants and uplink transmission of demodulation reference signals according to an embodiment of the invention.

**Description of the embodiments**

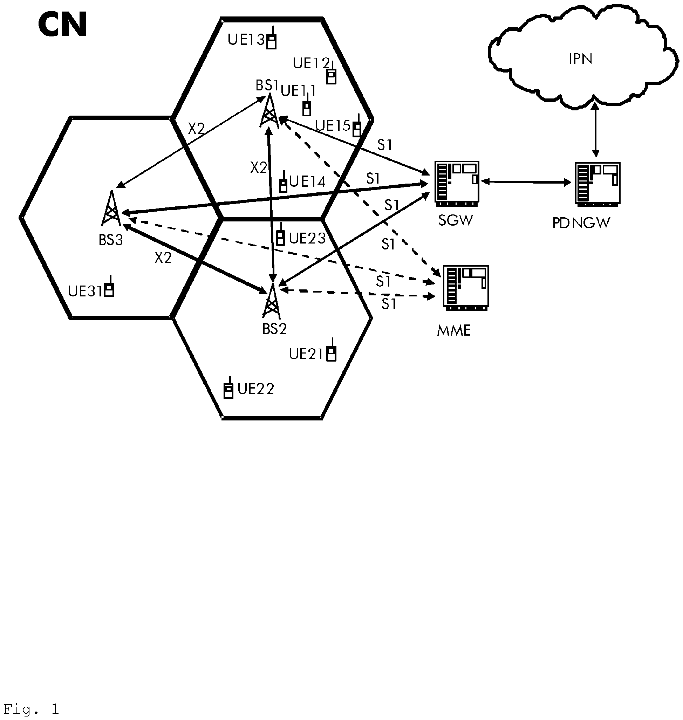

Fig. 1 shows as an example of a communication network in which the invention can be implemented a communication network CN according to the standard 3GPP LTE.

Said communication network CN comprises base stations BS1-BS3, user terminals UE11-UE31, a serving gateway SGW, a packet data network gateway PDNGW, and a mobility management entity MME.

The user terminals UE11-UE15 are connected via radio connections to the base station BS1, the user terminals UE21-UE23 are connected via radio connections to the base station BS2, and the user terminal UE31 is connected via a radio connections to the base station BS3. In future evolutions of LTE, each of the user terminals UE11-UE31 can also be connected via radio connections to multiple of said base stations BS1-BS3.

The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signalling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal and the respective serving base station BS1-BS3.

The mobility management entity MME performs tasks of the subscriber management and the session management, and also performs the mobility management during handover between different access networks.

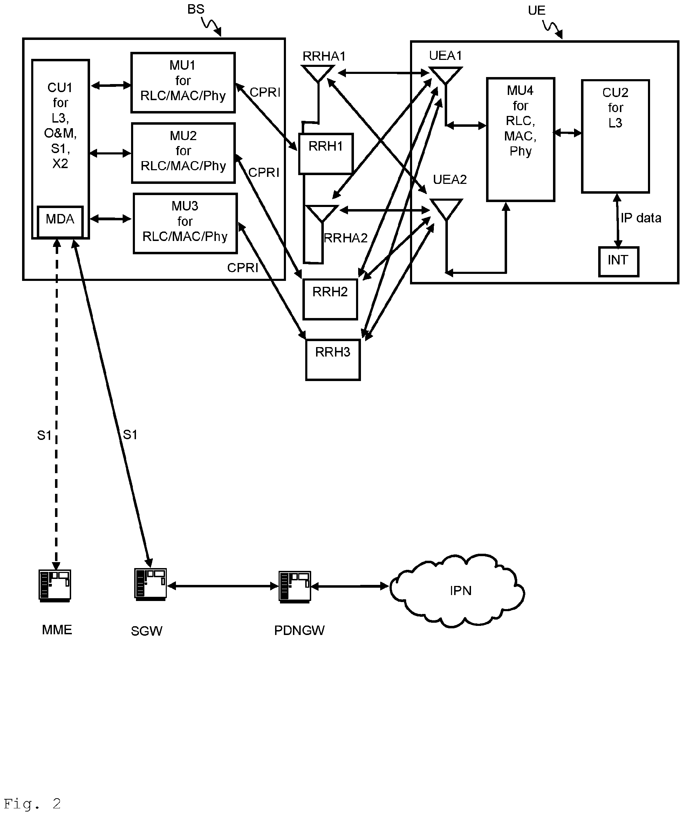

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

In the sequel, the usage of an embodiment of the invention in a CoMP cluster comprising several user terminals is described.

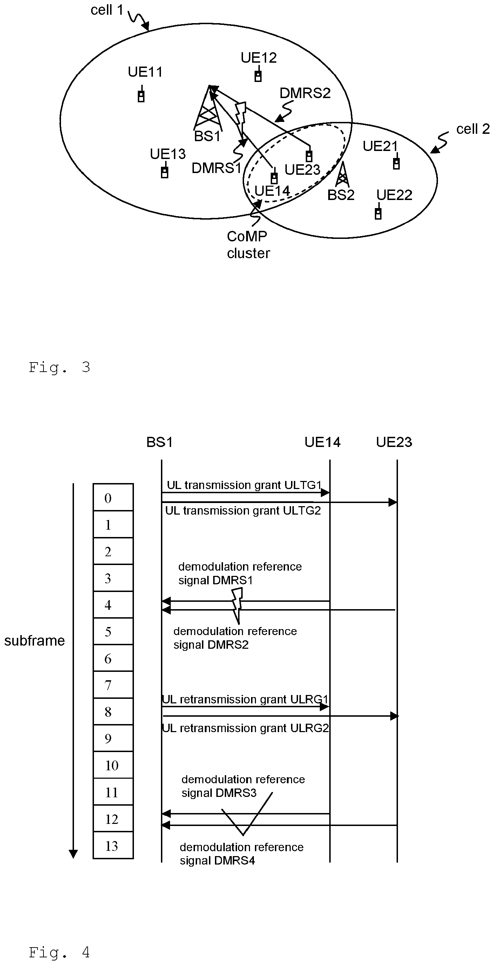

Fig. 3 schematically shows a scenario of collision of demodulation reference signals transmitted from two user terminals in a ComP cluster.

Fig. 3 shows a communication network comprising base stations BS1 and BS2 and user terminals UE11-UE23.

The user terminals UEll-UE13 are connected via radio connections to the base station BS1, and the user terminals UE21 and UE22 are connected via radio connections to the base station BS2. Furthermore, the user terminals UE14 and UE23 together build a CoMP cluster, and are connected via radio connections to both the base station BS1 and the base station BS2.

The base stations BS1 and BS2 are in turn connected to a serving gateway and to the mobility management entity, i.e. to the evolved packet core (EPC), via a so-called S1 interface, and are also connected among each other via the so-called X2 interface. However, for the sake of simplicity, said connections are not depicted in fig. 3.

Demodulation reference signals transmitted from the user terminals are used e.g. for channel estimation to enable coherent demodulation of physical uplink channels, as e.g. physical uplink shared channels (PUSCH) or physical uplink control channels (PUCCH).

In 3GPP LTE, e.g. in case of PUSCH transmission, the fourth OFDM symbol in each time slot of uplink transmission is used for reference signal transmission, so that in each uplink subframe, two reference signal transmissions are performed. For physical uplink control channel transmission, the number and position of OFDM symbols used for reference signal transmission depends on the used PUCCH format.

In PUSCH transmission, reference signal sequences of different length dependent on the possible bandwidth of a PUSCH transmission are available. However, the length of the reference signal sequence is restricted to multiples of resource blocks, with each resource block comprising 12 subcarriers. In PUCCH transmission, the length of a reference signal sequence is in any case 12 subcarriers.

For the transmission of reference signal sequences, preferably so-called cyclic extensions of Zadoff-Chu sequences are used, as they offer the required constant power in time and frequency domain.

The k elements $X_k$ of a Zadoff-Chu sequence can be represented by the following formula:

$$X_k = \exp(-i\pi u(k(k+1)/L); 0 \le k \le L$$

In this formula, u represents the index of the Zadoff-Chu sequence within an ensemble of Zadoff-Chu sequences that all have the same length L.

As a result, more than 30 reference signal sequences exist for each sequence length L. The reference signal sequences of different lengths are grouped into 30 sequence groups, with each sequence group comprising reference signal sequences for all allowed sequence lengths. For each sequence length L of 1 to 5 physical resource blocks, there is one reference signal sequence, and for each sequence length L of 6 or more physical resource blocks, there are two reference signal sequences in each sequence group.

In neighbouring cells, typically different sequence groups are used. Within a cell, cyclic shifts of a reference signal sequence can be used to multiplex reference signals from different user terminals within a cell.

Cyclic shifts within a cell lead to a good separation of the reference signals from the different user terminals, whereas the use of different sequence groups for neighbouring cells not necessarily leads to good separation of the reference signals from the different cells, e.g. as the reference signals from the different cells might have a different bandwidth, and as the different reference signal sequences have a certain cross-correlation.

In order to reduce cross-correlation between cells, cell specific pseudo-random hopping patterns are applied, like e.g. cyclic shift hopping and sequence group hopping. The sequence group hopping comprises both a group hopping pattern and a sequence shift. The same group hopping pattern is used in a cluster of 30 cells, and the sequence shifts guarantee that not the same sequence group is used in neighbouring cells of the cluster.

As the user terminals UE14 and UE23 in fig. 3 build a CoMP cluster, demodulation reference signals DMRS1 and DMRS2 transmitted from the user terminal UE14 and UE23 respectively are received both by the base station BS1 and the base station BS2.

The user terminal UE14 belongs to cell 1, and the user terminal UE23 belongs to cell 2. Thus, as described above, the reference signals from the user terminals UE14 and UE23 must not necessarily have a good separation.

According to an embodiment of the invention, the base station BS1 detects an unsuccessful reception of the demodulation reference signals DMRS1 and DMRS2 and thus determines reference signal sequences for the two user terminals UE14 and UE23 that would lead to an improved reception in the base station BS1 by means of a better separation, i.e. by means of a lower cross-correlation.

The base station BS1 signals the reference signal sequence that shall be used by the user terminal UE14 directly to the user terminal UE14, as the base station BS1 is the serving base station for the user terminal UE14. Furthermore, the base station BS1 signals the reference signal sequence that shall be used by the user terminal UE23 to the base station BS2 e.g. via an X2 interface, as the base station BS2 is the serving base station of the user terminal UE23. The base station BS2 in turn signals the reference signal sequence that shall be used by the user terminal UE23 to the user terminal UE23.

According to the embodiment of the invention, the reference signal sequences for the user terminals UE14 and UE23 are signalled from the base station BS1 and BS2 respectively in downlink control information fields, and in addition, also changes of the information in the downlink control information fields with respect to information in downlink control information fields for a previous transmission of reference signals are used for signalling said reference signal sequences for the user terminals UE14 and UE23 respectively.

According to the embodiment of the invention, the base stations BS1 and BS2 respectively signal to the user terminals UE14 and UE23 respectively in a so-called cyclic shift field, as e.g. used in the standard 3GPP TS 36.211, V10.4.0, table 5.5.2.1.1-1, a starting value n for a cyclic shift, and an orthogonal cover code vector dependent on the antenna port λ. According to the embodiment of the invention, a change of the cyclic shift field between two successive downlink control information signals related to uplink signals comprising the same user information, as e.g. in LTE provided by a HARQ process (HARQ = hybrid automatic repeat request), is related to information about the reference signal sequence that shall be used.

Table 1 and table 2 below show the 3 bit cyclic shift field as given in the standard 3GPP TS 36.211, V10.4.0, table 5.5.2.1.1-1, with an additional set index value SI in the last column that groups the 3 bit cyclic shift fields into different sets. In the first column, the 3 bit value for the cyclic shift is indicated, in columns 2 to 5, the starting value n for a cyclic shift dependent on the antenna port λ is indicated, and in columns 6 to 9, the orthogonal cover code vector dependent on the antenna port λ is indicated. The last column indicates the index SI of the set to which the cyclic shift value shall belong according to the embodiment of the invention. In table 1, the cyclic shift values are grouped into 2 sets indicated by 0 and 1 in the last column, and in table 2, the cyclic shift values are grouped into 4 sets indicated by 0 to 3 in the last column according to 2 different alternatives of the embodiment of the invention. The grouping of the cyclic shift values into different sets is preferably performed in such a way, that reference signals using a first cyclic shift value from one set have a good separation from reference signals using a second cyclic shift value from the same set.

Table 1:

| Cyclic Shift Value | $n_\lambda$ | | | | $[w^{(\lambda)}(0)\ w^{(\lambda)}(1)]$ | | | | SI |
|---|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ | |
| 000 | 0 | 6 | 3 | 9 | [1 1] | [1 1] | [1 -1] | [1 -1] | 0 |
| 001 | 6 | 0 | 9 | 3 | [1 -1] | [1 -1] | [1 1] | [1 1] | 1 |
| 010 | 3 | 9 | 6 | 0 | [1 -1] | [1 -1] | [1 1] | [1 1] | 0 |
| 011 | 4 | 10 | 7 | 1 | [1 1] | [1 1] | [1 1] | [1 1] | 0 |
| 100 | 2 | 8 | 5 | 11 | [1 1] | [1 1] | [1 1] | [1 1] | 1 |
| 101 | 8 | 2 | 11 | 5 | [1 -1] | [1 -1] | [1 -1] | [1 -1] | 0 |
| 110 | 10 | 4 | 1 | 7 | [1 -1] | [1 -1] | [1 -1] | [1 -1] | 1 |
| 111 | 9 | 3 | 0 | 6 | [1 1] | [1 1] | [1 -1] | [1 -1] | 1 |

Table 2:

| Cyclic Shift Value | $n_\lambda$ | | | | $[w^{(\lambda)}(0)\ w^{(\lambda)}(1)]$ | | | | SI |
|---|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ | |
| 000 | 0 | 6 | 3 | 9 | [1 1] | [1 1] | [1 -1] | [1 -1] | 0 |
| 001 | 6 | 0 | 9 | 3 | [1 -1] | [1 -1] | [1 1] | [1 1] | 1 |
| 010 | 3 | 9 | 6 | 0 | [1 -1] | [1 -1] | [1 1] | [1 1] | 0 |
| 011 | 4 | 10 | 7 | 1 | [1 1] | [1 1] | [1 1] | [1 1] | 2 |
| 100 | 2 | 8 | 5 | 11 | [1 1] | [1 1] | [1 1] | [1 1] | 3 |
| 101 | 8 | 2 | 11 | 5 | [1 -1] | [1 -1] | [1 -1] | [1 -1] | 2 |
| 110 | 10 | 4 | 1 | 7 | [1 -1] | [1 -1] | [1 -1] | [1 -1] | 3 |
| 111 | 9 | 3 | 0 | 6 | [1 1] | [1 1] | [1 -1] | [1 -1] | 1 |

Table 3 below shows the interpretation of changes of the set index value SI in table 1 and table 2 respectively for a transmission of reference signals compared to a previous transmission of reference signals.

Table 3 shows in the first column the absolute value of the change of the set index value SIC. For the first alternative of the embodiment of the invention with 2 sets of cyclic shift values indicated by SI = 0 and SI = 1 in table 1, only values 0 and 1 are possible for the absolute value of the change of the set index value SIC. For the second alternative of the embodiment of the invention with 4 sets of cyclic shift values indicated by SI = 0, 1, 2 and 3 in table 2, all values 0 to 3 are possible for the absolute value of the change of the set index value SIC.

In the second column of table 3, the interpretation of the set index change SIC is given for the case that the cyclic shift values are grouped into 2 sets of cyclic shift values indicated by SI = 0 and SI = 1 in table 1.

In case that the set index value SI has not changed, i.e. in case that the set index change SIC = 0, no change other than the one indicated by the cyclic shift field in the downlink control information is performed. In other words, the signalled user terminal shall have a legacy behaviour with respect to the reference signal sequence the user terminal shall use.

In case that the set index value SI has changed, i.e. in case that the set index change SIC = 1, it is indicated, that sequence group hopping (SGH), as e.g. specified by 3GPP TS 36.211 V10.3.0 (2011-09) chapter 5.5.1.3 and sequence hopping, as e.g. specified by 3GPP TS 36.211 V10.3.0 (2011-09) chapter 5.5.1.4 shall be disabled, and that a dedicated preconfigured cyclic shift (CS) hopping pattern shall be used for the uplink signal transmission subframe for which the downlink control information containing the cyclic shift field is intended for.

In principle, inter-slot sequence group hopping, sequence hopping and cyclic shift hopping is most favourable, as it randomizes correlations between reference signal sequences and will thus probably be used as much as possible. However, if in case of a globally, i.e. network-wide, unsuccessful reception of reference signals due to colliding reference signals DMRS1 and DMRS2 from the two user terminals UE14 and UE23, it will improve the probability of successful reception of signals retransmitted from the two user terminals UE14 and UE23, if the involved demodulation reference signals are transmitted with improved collision properties. One such approach for improved collision properties, already present in 3GPP is the application of the so-called orthogonal cover code (OCC) of degree two, which makes the demodulation reference signals orthogonal in principle and provides increased probability of successful reception given all other system states keep constant. However, to make the orthogonal cover code work, on top of choosing differing OCC indexes for the involved user terminals in the signalled retransmission, sequence group hopping (SGH) and sequence hopping shall be disabled, and the same dedicated preconfigured cyclic shift (CS) hopping pattern shall be used for the retransmission of the reference signals, which is signalled by the downlink control information in which the change of the set index SI occured. As an alternative, instead of using the same dedicated preconfigured cyclic shift (CS) hopping pattern for the retransmission of the reference signals from the two user terminals UE14 and UE23, cyclic shift hopping is disabled.

The values for the set index change SIC = 2 and SIC = 3 can not occur in the case that the cyclic shift values are grouped into only 2 sets of cyclic shift values indicated by SI = 0 and SI = 1.

In the third column of table 3, the interpretation of the set index change SIC is given for the case that the cyclic shift values are grouped into 4 sets of cyclic shift values indicated by SI = 0, 1, 2, 3 in table 2.

In case that the set index value SI has not changed, i.e. in case that the set index change SIC = 0, no change other than the one indicated by the cyclic shift field in the downlink control information is performed. In other words, the signalled user terminal shall have a legacy behaviour with respect to the reference signal sequence the user terminal shall use.

In case that the set index value SI has changed by 1, i.e. in case that the set index change SIC = 1, it is indicated, that sequence group hopping (SGH) and sequence hopping shall be disabled, and that a dedicated preconfigured cyclic shift (CS) hopping pattern shall be used.

Thus, these two cases correspond to the situation of the cyclic shift values being grouped into 2 sets of cyclic shift values as described above.

The usage of a set index change SIC = 2 and SIC = 3 is either statically or semi-statically by pre-configuration defined and indicates one or a combination of the following usage of predefined

- base sequence

- cell ID

- sequence group hopping (SGH) and sequence hopping enable/disable state

- cyclic shift hopping pattern
  for the retransmission the respective downlink control information is dedicated for. In table 3, a usage set drawn from one or a combination of the aforementioned usages is indicated by US#<index>, which can be used for a method signalling reference signal sequences in case of SIC = 2 or SIC = 3.

In case that the set index value SI has changed by 2, i.e. in case that the set index change SIC = 2, it can e.g. be indicated, that a dedicated preconfigured reference signal sequence is used, as e.g. a Zadoff-Chu sequence with a dedicated preconfigured index u, that does not change from slot to slot. As said dedicated preconfigured reference signal sequence, also called base sequence, varies from cell to cell, there is a pretty good separation of the reference signals from the two user terminals UE14 and UE23. The use of different dedicated preconfigured reference signal for the two user terminals UE14 and UE23 that do not change from slot to slot can be seen as an alternative to the scenario indicated by a set index change of SIC = 1 described above.

In a further embodiment of the invention, it is indicated by a dedicated set index change SIC, that sequence group hopping (SGH) shall be disabled, or that a dedicated preconfigured cyclic shift (CS) hopping pattern shall be used, as already the application of only one of the group of disabling sequence group hopping (SGH) and usage of a dedicated preconfigured cyclic shift (CS) hopping pattern leads to an improved separation of the reference signals from the two user terminals UE14 and UE23. In table 3 e.g., it is indicated that in case that the set index value SI has changed by 3, i.e. in case that the set index change SIC = 3, a dedicated preconfigured cyclic shift (CS) hopping pattern is used.

In principle, the base station BS1 will chose the cyclic shift values in case of unsuccessful reception of the reference signals from the two user terminals UE14 and UE23 in such a way, that there is a set index change SIC different from 0, as this will lead to an improved separation probability of the reference signals retransmitted from the two user terminals UE14 and UE23.

Table 3:

| Set index change SIC | SI = 0, 1 | SI = 0, 1, 2, 3 |
|---|---|---|
| 0 | Legacy behaviour | Legacy behaviour |
| 1 | Disable SGH and sequence hopping, use alternatively configured CS hopping | Disable SGH and sequence hopping, use alternatively configured CS hopping |
| 2 | NA | usage set US#2 |
| 3 | NA | usage set US#3 |

As an example for the application of a method according to the invention in which the cyclic shift values are grouped into 2 sets as depicted in table 1, if the two user terminals UE14 and UE23 both use the cyclic shift value "000", and the reference signals transmitted from said user terminals collide and lead to globally, i.e. network-wide, unsuccessful reception, a radio access network (RAN) to which the base stations BS1 and BS2 belong chooses, either planned or randomly, two cyclic shift values from table 1 for the retransmission of the reference signals from the user terminals UE14 and UE23 that belong, or if randomly chosen potentially belong to a different set than the previously used cyclic shift value "000", which has a set index value SI = 0, i.e. the radio access network chooses two cyclic shift values with a set index value SI = 1.

E.g., the radio access network can choose the cyclic shift value "001" for retransmission of the reference signal from the user terminal UE14, and "100" for retransmission of the reference signal from the user terminal UE23.

Said cyclic shift values are signalled from base station BS1 directly in downlink control information to the user terminal UE14, and via the base station BS2 in downlink control information to the user terminal UE23. The user terminals UE14 and UE23 evaluate that there is a change in the set index of SIC = 1, and as the entries of table 3 are known in the user terminals UE14 and UE23, said user terminals UE14 and UE23 know that they have to disable sequence group hopping (SGH), sequence hopping, and that they have to use a dedicated preconfigured cyclic shift (CS) hopping pattern, which leads to an improved separation of the retransmitted reference signals from the two user terminals UE14 and UE23.

In an embodiment of the invention, the base station BS1 may directly signal transmission grants in downlink control information to both the user terminal UE14 and the user terminal UE23.

Fig. 4 schematically shows a scenario for such a downlink signalling of transmission grants and uplink transmission of demodulation reference signals according to the embodiment of the invention.

The signalling between the base station BS1 and the two user terminals UE14 and UE23 over a timespan of 14 subframes 0-13 is depicted in fig. 4.

In subframe 0, the base station BS1 signals a first uplink transmission grant ULTG1 to the user terminal UE14, and a second uplink transmission grant ULTG2 to the user terminal UE23. Said uplink transmission grants ULTG1 and ULTG2 comprise downlink control information as e.g. a cyclic shift field.

In the example, the value of the cyclic shift field shall be "000" in both uplink transmission grants ULTG1 and ULTG2. Thus, a demodulation reference signal DMRS1 transmitted from the user terminal UE14 in subframe 4, and a demodulation reference signal DMRS2 transmitted from the user terminal UE23 in subframe 4 collide in the base station BS1 and lead to an unsuccessful reception of the two demodulation reference signals DMRS1 and DMRS2 in the base station BS1.

The base station BS1 chooses two cyclic shift values from table 1 for the retransmission of the demodulation reference signals from the user terminals UE14 and UE23 as described above, i.e. the base station BS1 can e.g. choose the cyclic shift value "001" for retransmission of the demodulation reference signal from the user terminals UE14, and "100" for retransmission of the reference signals from the user terminals UE23.

In subframe 8, the base station BS1 signals a first uplink retransmission grant ULRG1 to the user terminal UE14, and a second uplink retransmission grant ULRG2 to the user terminal UE23 comprising a cyclic shift field with the cyclic shift value "001" and "100" respectively.

As described above, the user terminals UE14 and UE23 know that they have to disable sequence group hopping (SGH), sequence hopping, and that they have to use a dedicated preconfigured cyclic shift (CS) hopping pattern, as the set index change SIC = 1, which leads to an improved separation of the retransmitted reference signals from the two user terminals UE14 and UE23.

In subframe 12, the user terminals UE14 and UE23 transmit demodulation reference signals DMRS3 and DMRS4 respectively based on the parameters indicated by the value of the cyclic shift field "001" and "100" respectively, and with disabled sequence group hopping (SGH), and using a dedicated preconfigured cyclic shift (CS) hopping pattern, which leads to an improved separation of the demodulation reference signals DMRS3 and DMRS4, and thus to a successful reception of the demodulation reference signals DMRS3 and DMRS4 in the base station BS1.

In the embodiments described above, the two user terminals UE14 and UE23 belong to a common CoMP cluster. However, in further embodiments of the invention, one of the user terminals that transmit colliding reference signals in uplink can be located outside the CoMP cluster. Thus, the collision of reference signals can happen e.g. between the user terminals UE14 and UE21 in fig.3.

**Claims**

1. A method for retransmission of reference signals (DMRS3, DMRS4) in uplink from at least two network devices (UE14, UE23) to a further network device (BS1) in case of unsuccessful reception of said reference signals (DMRS1, DMRS2) in the further network device (BS1), wherein

   • sequences for the retransmission of the reference signals (DMRS3, DMRS4) in uplink from said at least two network devices (UE14, UE23) are determined that lead to an improved reception in the further network device (BS1) of the reference signals (DMRS3, DMRS4) retransmitted from said at least two network devices (UE14, UE23),
   • said sequences for the retransmission of the reference signals (DMRS3, DMRS4) are signaled to said at least two network devices (UE14, UE23) using information which is directly signaled in downlink control information fields (ULRG1, ULRG2) and using changes of the information in the downlink control information fields (ULRG1, ULRG2) with respect to information in downlink control information fields (ULTG1, ULTG2) for a previous transmission of reference signals (DMRS1, DMRS2),
   • and the reference signals (DMRS3, DMRS4) are retransmitted in uplink from said at least two network devices (UE14, UE23) using said signaled sequences for the retransmission of the reference signals (DMRS3, DMRS4).

2. A method according to claim 1, wherein certain changes of the information in the downlink control information fields (ULRG1, ULRG2) with respect to the information in the downlink control information fields (ULTG1, ULTG2) for the previous transmission of the reference signals (DMRS1, DMRS2) indicate that said at least two network devices (UE14, UE23) use an identical cyclic shift hopping pattern for the retransmission of the reference signals (DMRS3, DMRS4).

3. A method according to claim 2, wherein according to said identical cyclic shift hopping pattern no cyclic shifts are performed.

4. A method according to any of the preceding claims, wherein certain changes of the information in the downlink control information fields (ULRG1, ULRG2) with respect to the information in the downlink control information fields (ULTG1, ULTG2) for the previous transmission of the reference signals (DMRS1, DMRS2) indicate that at least one of the group of sequence group hopping and sequence hopping must be disabled for the retransmission of the reference signals (DMRS3, DMRS4).

5. A method according to any of the preceding claims, wherein certain changes of the information in the downlink control information fields (ULRG1, ULRG2) with respect to the information in the downlink control information fields (ULTG1, ULTG2) for the previous transmission of the reference signals (DMRS1, DMRS2) indicate that a predefined dedicated base sequence for each of said at least two network devices (UE14, UE23) is used for the retransmission of the reference signals (DMRS3, DMRS4).

6. A method according to any of the preceding claims, wherein said changes of the information in the downlink control information fields (ULRG1, ULRG2) are changes of the cyclic shift field.

7. A method according to any of the preceding claims, wherein said at least two network devices (UE14, UE23) are user terminals, and said further network device (BS1) is a base station.

8. A method according to claim 7, wherein

   • said at least two user terminals (UE14, UE23) are served by at least two different base stations (BS1, BS2),
   • and the base station (BS1) having experienced the unsuccessful reception of the reference signals (DMRS1, DMRS2) transmits to at least one base station (BS2) serving at least one network device (UE23) of said at least two network devices (UE14, UE23) information that allows for a determination of sequences for the retransmission of the reference signals (DMRS3, DMRS4).

9. A network device (UE14, UE23) for mobile communication, wherein said network device (UE14, UE23) is adapted to

• receive sequences for a retransmission of reference signals (DMRS3, DMRS4) by means of information which is directly signaled in downlink control information fields (ULRG1, ULRG2) and by means of changes of the information in the downlink control information fields (ULRG1, ULRG2) with respect to information in downlink control information fields (ULTG1, ULTG2) for a previous transmission of reference signals (DMRS1, DMRS2), • and retransmit reference signals (DMRS3, DMRS4) in uplink using said signaled sequences for the retransmission of the reference signals (DMRS3, DMRS4).

10. A network device (BS1) for mobile communication, wherein said network device (BS1) is adapted to

• determine sequences for a retransmission of reference signals (DMRS3, DMRS4) in uplink from at least two other network devices (UE14, UE23) that lead to an improved reception in the network device (BS1) of the reference signals (DMRS3, DMRS4) retransmitted from said at least two other network devices (UE14, UE23), • and signal said sequences for the retransmission of the reference signals (DMRS3, DMRS4) to at least one of said at least two other network devices (UE14, UE23) using information which is directly signaled in downlink control information fields (ULRG1, ULRG2) and using changes of the information in the downlink control information fields (ULRG1, ULRG2) with respect to information in downlink control information fields (ULTG1, ULTG2) for a previous transmission of reference signals (DMRS1, DMRS2).

11. A communication network for mobile communication comprising at least two network devices (UE14, UE23) according to claim 9 and at least one network device (BS1) according to claim 10.

Fig. 1

Fig. 2

cell 1

UE12

UE11

DMRS2

BS1

DMRS1

UE13

UE23

cell 2

UE21

UE14

BS2

UE22

CoMP
cluster

Fig. 3

BS1                    UE14        UE23

subframe

| 0 |
| 1 |
| 2 |
| 3 |
| 4 |
| 5 |
| 6 |
| 7 |
| 8 |
| 9 |
| 10 |
| 11 |
| 12 |
| 13 |

UL transmission grant ULTG1

UL transmission grant ULTG2

demodulation reference
signal DMRS1

demodulation reference
signal DMRS2

UL retransmission grant ULRG1

UL retransmission grant ULRG2

demodulation reference
signal DMRS3

demodulation reference
signal DMRS4

Fig. 4

| | Europäisches Patentamt |
|---|---|
| | European Patent Office |
| | Office européen des brevets |

# EUROPEAN SEARCH REPORT

**Application Number**

EP 12 30 5115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI: "CS and OCC signaling for UL DM RS", 3GPP DRAFT; R1-104301, 3RD GENERATION PARTNERSHIP PROJECT (3GPP), MOBILE COMPETENCE CENTRE, vol. RAN WG1, 17 August 2010 (2010-08-17), XP050449660, SOPHIA-ANTIPOLIS CEDEX ; FRANCE [retrieved on 2010-08-17] | 1,6,7, 9-11 | INV. H04L1/16 H04L27/26 H04L23/02 |
| Y | * Section 2.3. * <br> * Section 3 * <br> * table 1 * | 2-5,8 | |
| Y | MOTOROLA MOBILITY: "Views on UL CoMP Enhancements and Standardization Impact", 3GPP DRAFT; R1-113263 - UL COMP ENHANCEMENTS STANDARDIZATION IMPACT, 3RD GENERATION PARTNERSHIP PROJECT (3GPP), MOBILE COMPETENCE CENTRE, vol. RAN WG1, 5 October 2011 (2011-10-05), XP050538523, SOPHIA-ANTIPOLIS CEDEX ; FRANCE [retrieved on 2011-10-05] * Section 2.1. * | 2-5,8 | |
| A | PANASONIC: "OCC and CS for UL DMRS in SU/MU-MIMO", 3GPP DRAFT; R1-104906, 3RD GENERATION PARTNERSHIP PROJECT (3GPP), MOBILE COMPETENCE CENTRE, vol. RAN WG1, 17 August 2010 (2010-08-17), XP050450053, SOPHIA-ANTIPOLIS CEDEX ; FRANCE [retrieved on 2010-08-17] * Section 2.3 * | 1-11 | TECHNICAL FIELDS SEARCHED (IPC) <br><br> H04L <br> H04B |

-/--

The present search report has been drawn up for all claims

| Place of search | Date of completion of the search | Examiner |
|---|---|---|
| The Hague | 15 June 2012 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 12 30 5115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALCATEL-LUCENT SBELL ET AL: "DMRS CSI selection in Non-adaptive retransmission", 3GPP DRAFT; R1-104403, 3RD GENERATION PARTNERSHIP PROJECT (3GPP), MOBILE COMPETENCE CENTRE, vol. RAN WG1, no. Madrid, Spain; 20100823, 17 August 2010 (2010-08-17), XP050449743, SOPHIA-ANTIPOLIS CEDEX ; FRANCE [retrieved on 2010-08-17] * Section MU-MIMO * * Introduction * ----- | 1-11 | |
| A | CATT: "UL DMRS signaling with OCC", 3GPP DRAFT; R1-104334, 3RD GENERATION PARTNERSHIP PROJECT (3GPP), MOBILE COMPETENCE CENTRE, vol. RAN WG1, 17 August 2010 (2010-08-17), XP050449691, SOPHIA-ANTIPOLIS CEDEX ; FRANCE [retrieved on 2010-08-17] * Sections 2.2.-2.3. * ----- | 1-11 | |
| A | HUAWEI: "Issues of Type 2 Relay", 3GPP DRAFT; R1-093044, 3RD GENERATION PARTNERSHIP PROJECT (3GPP), MOBILE COMPETENCE CENTRE, 18 August 2009 (2009-08-18), XP050351436, SOPHIA-ANTIPOLIS CEDEX ; FRANCE [retrieved on 2009-08-18] * page 5, paragraph 1 * * figure 3b * ----- | 1,9-11 | TECHNICAL FIELDS SEARCHED (IPC) |
| A | EP 2 056 515 A1 (NOKIA SIEMENS NETWORKS OY [FI]) 6 May 2009 (2009-05-06) * paragraph [0037] * * paragraph [0040] * ----- | 1,9-11 | |

The present search report has been drawn up for all claims

| Place of search | Date of completion of the search | Examiner |
|---|---|---|
| The Hague | 15 June 2012 | Moreno, Marta |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 30 5115

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2012

| Patent document cited in search report | Publication date | Patent family member(s) | | Publication date |
|---|---|---|---|---|
| EP 2056515 A1 | 06-05-2009 | CN | 101911580 A | 08-12-2010 |
| | | EP | 2056515 A1 | 06-05-2009 |
| | | RU | 2010121542 A | 10-12-2011 |
| | | US | 2010296465 A1 | 25-11-2010 |
| | | WO | 2009056464 A1 | 07-05-2009 |

EPO FORM P0459

For more details about this annex : see Official Journal of the European Patent Office, No. 12/82